# EUROPÄISCHE PATENTSCHRIFT

(11) **EP 2 820 939 B1**
(45) Veröffentlichungstag und Bekanntmachung des Hinweises auf die Patenterteilung: **28.03.2018**
(21) Anmeldenummer: 13174529.1
(22) Anmeldetag: 01.07.2013
(51) Int. Cl.: A01D 78/10, A01D 57/20, A01D 78/00, A01D 84/00

(54) **Kreiselheuer**
Rotary tedder
Faneuse rotative

(43) Veröffentlichungstag der Anmeldung: 07.01.2015
(73) Patentinhaber: Kverneland A/S, 4355 Kvernaland (NO)
(72) Erfinder: Eder, Josef, 94491 Hengersberg (DE)
(74) Vertreter: Grünecker Patent- und Rechtsanwälte PartG mbB

(56) Entgegenhaltungen:
- EP-A1- 1 935 229
- EP-A1- 2 042 023
- WO-A1-99/33332
- DE-B- 1 167 092

## Beschreibung

Die Erfindung betrifft einen Kreiselheuer gemäß Oberbegriff des Patentanspruches 1.

Beim maschinellen Futterernteprozess wird Grüngut nach dem Mähen zuerst gezettet und gewendet und nach der Trocknung zu Schwaden zusammengerecht. Dafür haben sich im Markt zwei Gerätetypen durchgesetzt, nämlich zum Zetten und Wenden der Kreiselheuer sowie zum Zusammenrechen und Schwadbilden der Kreiselschwader. Daneben sind im Markt verschiedene Universalheugeräte im Einsatz, die für beide Arbeiten verwendbar sind. In der Regel werden bei Universalgeräten zwischen den Arbeiten Wenden und Schwadbilden die Zinkenstellung, die Drehrichtung der Zinkenrotoren und gegebenenfalls die Umfangsgeschwindigkeit umgestellt, was sehr zeitaufwändig und arbeitsintensiv sein kann und erhebliches Geschick erfordert. Für größere, professionelle Futtererntebetriebe konnten sich Universalgeräte schon deshalb nicht durchsetzen, u.a. aber auch wegen eingeschränkter Arbeitsleistung und -qualität. Universalgeräte werden deshalb im Wesentlichen nur mehr in kleinen Futtererntebetrieben verwendet. Wenn für beide Arbeiten nur ein Universalgerät eingesetzt wird, ist dies beispielsweise im Hinblick auf eine Futterverschmutzung günstig, da gezettetes und gewendetes Grünfutter nicht erneut zum Schwadbilden überfahren wird, und werden durch Einsparung eines Arbeitsganges Kraftstoffkosten reduziert.

Bei einem aus DE 11 67 092 B bekannten Kreiselheuer mit vier am quer verlaufenden Tragbalken angeordneten Rechkreiseln sind hinter den Rechkreiseln an einer Rahmenstruktur zwei vertikal stehende Rechräder angeordnet, die schräg zur Fahrtrichtung orientiert sind und durch Kontakt mit dem Erntegut oder dem Boden angetrieben werden, um zwei von den Rechkreiseln gebildete Nachtschwaden zu einem Mittelschwad oder zu einem Seitenschwad zusammenzuführen.

Bei einer aus EP 2 042 023 A1 bekannten Mähmaschine sind an einem einen Längsträger aufweisenden Fahrwerk an beiden Seiten über Schwenkarme Mähwerke angebracht, die mehrere Mähscheiben und diesen zugeordnet wenigstens einen Konditionierrotor enthalten. Am Rahmen dieser kombinierten Mäh- und Konditioniereinheiten sind oberseitig zwei Knickarme angeordnet, die hinter dem Mähwerk jeweils zwei Schwadverlegebänder tragen, die sich über die Arbeitsbreite des Mähwerks erstrecken. Die beiden Paare der Schwadverlegebänder bilden einen Mittenschwad mit festgelegter Breite. Die beiden Schwadverlegebänder jedes Mähwerks sind miteinander gekoppelt, so dass ein Schwadverlegeband an das andere übergibt, das das Mähgut in den Mittelschwad fördert.

Aus EP 1 935 229 A1 ist eine Heuwerbungsmaschine bekannt, die an Querträgern eines Fahrwerk-Längsträgers hochschwenkbar angeordnete Zinkenkreiselpaare aufweist. Die vorderen beiden Zinkenkreisel sind näher beieinander angeordnet und bilden einen Mittelschwad, während die beiden hinteren Mähkreisel weiter voneinander beabstandet sind und einen Mittelschwad bilden, der breiter ist, als der von den beiden vorderen Kreiseln gebildete Mittelschwad. In einer Ausführungsform ist jedem hinteren Rechkreisel ein translatorischer Förderer nach Art eines Förderbandes angeordnet, der sich quer zur Fahrtrichtung erstreckt und die Umlaufbahn des Rechkreisels an dessen Hinterseite überlappt. Die beiden Förderer sind zur Mitte hin ansteigend positioniert und jeweils an einem Rechkreisel montiert.

Der Erfindung liegt die Aufgabe zugrunde, einen Kreiselheuer der eingangs genannten Art so zu verbessern, dass er auch in größeren, professionellen Futtererntebetrieben die im Hinblick auf unterschiedliche Aspekte vorteilhaften Funktionen eines Universalgerätes für beide Arbeiten, d.h. Zetten und Wenden sowie Schwadbilden bzw. Zusammenrechen bei nicht beschränkter Arbeitsleistung und -qualität ermöglicht.

Die gestellte Aufgabe wird mit den Merkmalen des Patentanspruchs 1 gelöst.

Um wenigstens einen Schwad zu bilden, wird das gezettete und gewendete Grünfutter von den Zinkenrotoren vom Boden aufgenommen und auf kürzestem Weg auf das Schwadverlegeband gefördert, das ohne neuerliches Überfahren gleich das gewünschte Schwad bildet. Je nach Einstellung des Schwadverlegebandes kann ein Mittenschwad oder ein Seitenschwad gebildet werden. Hierfür notwendige Verstellungen des Schwadverlegebandes gestalten sich weitaus weniger aufwändig als Verstellungen der Zinken, der Umlaufgeschwindigkeit, der Drehrichtung und die Einstellung von Schwadtüchern oder Leitblechen. Selbst Kreiselheuer mit großen Arbeitsbreiten und hoher Arbeitsleistung können mit Hilfe des wenigstens einen Schwadverlegebandes ausgelastet werden. Auch bei großen Erntemengen wird die Kapazität von später eingesetzten Ladewagen-Pick-Up-Walzen durch ein so gebildetes Mittenschwad nicht überschritten. Der Kreiselheuer mit dem wenigstens einen Schwadverlegeband zeichnet sich ferner durch kompakte Transportabmessungen aus und kann an einem vorderen oder hinteren Dreipunktanbau eines Schleppers transportiert werden. Am Vorgewende und auf ungünstig geschnittenen Feldern ist ein einfaches Manövrieren und Rückwärtssetzen möglich. Ein Transportfahrwerk, wie es für ein äquivalentes Universalgerät mit gleicher Leistungsfähigkeit erforderlich ist, wird nicht unbedingt benötigt. Allerdings kann ein gezogener Kreiselheuer ein Fahrwerk aufweisen, und nur angekoppelt und nicht unbedingt an den Dreipunktanbau des Schleppers angebaut sein. Selbst wenn direkt mehrere Schwaden zu einem großen Schwad zusammengerecht werden, entsteht ein lockerer und durchlüfteter Schwad, da der Kreiselheuer mit seinen Zinkenrotoren das Erntegut vorteilhaft aufbereitet und das Schwadverlegeband die Lockerheit kaum spürbar beeinflusst. Der Kreiselheuer mit größerer Arbeitsbreite weist beiderseits einen Schlepper-Anbaubock, geeignet zum Anschluss an die Dreipunkt-Hebevorrichtung eines Schleppers, oder einer Kopplung des Fahrwerks an Tragbalkenseitenteilen oder Fahrwerksseitenteilen jeweils mindestens zwei Zinkenrotoren auf, wobei an jedem Tragbalkenseitenteil oder Fahrwerkseitenteil wenigstens ein Schwadverlegeband vorgesehen ist. Vorzugsweise ist pro Arbeitsbreite, definiert beispielsweise von zwei oder drei benachbarten Zinkenrotoren, ein Schwadverlegeband vorgesehen. Bei noch größeren Arbeitsbreiten können jedoch an jedem Tragbalkenseitenteil, der, wie üblich, in mehrere Abschnitte unterteilt ist, oder am Fahrwerkseitenteil mehrere Schwadverlegebänder angeordnet sein, die jeweils einzeln oder paarweise Schwade bilden oder im Zusammenspiel gemeinsam ein großes Mittenschwad ablegen. Die Schwadverlegebänder sind eine Mittenschwad-Bildestellung mit einem mittigen Zwischenabstand einstellbar und dabei gegensinnig zur Mitte hin antreibbar, oder ohne Zwischenabstand bzw. gestaffelt oder einander sogar überlappend in je eine Seitenschwad-Bildestellung einstellbar und gleichsinnig zur jeweiligen Schwadseite antrabbar. Auf diese Weise sind insgesamt drei Schwadbilde-Strategien ausführbar, was jedoch nicht ausschließt, die Schwadverlegebänder so einzustellen, dass jedes einen eigenen Schwad bildet, falls dies aus anderen Gründen zweckmäßig sein sollte. Sind z.B. pro Seite des Kreiselheuers zwei oder mehrere Schwadverlegebänder vorgesehen, können diese wahlweise in einzelne, oder gruppenweise in mehrere oder gemeinsam in ein Mitten- oder Seitenschwad fördern.

Bei einer zweckmäßigen Ausführungsform ist das Schwadverlegeband in einem Anbauraum, z.B. am Tragbalken oder einem den Tragbalken stützenden Fahrwerk des Kreiselheuers fest montiert und zwischen einer abgesenkten Verlegestellung und einer angehobenen Passivstellung umstellbar. In der Verlegestellung kann das jeweils gewünschte Schwad problemlos gebildet werden. In der Passivstellung greift das Schwadverlegeband hingegen in den Arbeitsprozess nicht ein, so dass der Kreiselheuer wie ein konventioneller Kreiselheuer nur zum Zetten und Wenden einsetzbar ist. Die Passivstellung ermöglicht auch kompakte Transportabmessungen.

Eine besonders zweckmäßige Ausführungsform zeichnet sich dadurch aus, dass das Schwadverlegeband in einem Anbauraum des Kreiselheuers, z.B. am Tragblaken oder einem Fahrwerk, jederzeit demontierbar festgelegt ist, vorzugsweise mit wenigstens einer Schnellwechselvorrichtung, und, vorzugsweise, in festgelegtem Zustand zwischen einer abgesenkten Verlegestellung und einer angehobenen Passivstellung umstellbar ist. Das mindestens eine Schwadverlegeband wird nur dann anmontiert, wenn wenigstens ein Schwad gebildet werden soll, ist dann jedoch mit nur wenigen Handgriffen demontierbar, d.h. mit weitaus weniger Aufwand, als bisher bei äquivalenten Universalgeräten eine Umstellung vorzunehmen war. Da das Basisgerät ein Kreiselheuer ist, kann dieser bei demontiertem Schwadverlegeband seine Hauptaufgabe bodenschonend erfüllen, was beispielsweise auf druckempfindlichen Böden günstig ist. Denn das Zusatzgewicht des Schwadverlegebandes ist nach dessen Demontage nicht mehr vorhanden. Der Kreiselheuer kann mit dem wenigstens einen angebrachten Schwadverlegeband auch als Schwader nur zum Zusammenführen mehrerer bereits abgelegter Schwade zu einem großen Schwad (Seitenschwad oder Mittenschwad) eingesetzt werden. Dieses große Schwad ist locker und luftig, da das Erntegut durch die Zinkenrotoren des Kreiselheuers bei der Überführung auf das Schwadverlegeband gelockert und von dem Schwadverlegeband locker abgelegt wird. Falls das Schwadverlegeband jederzeit demontierbar angebracht ist, kann seine Umstellbarkeit zwischen der Verlegestellung und der Passivstellung gegebenenfalls entfallen, obwohl diese Umstellmöglichkeit auch dann beispielsweise am Vorgewende oder beim Manövrieren von Vorteil sein kann.

Bei einer zweckmäßigen Ausführungsform ist am Anbauraum des Kreiselheuers, d.h. am Tragbalken oder Fahrwerk, eine Verstellvorrichtung (Querverstellung und/oder Hochverstellung) für das Schwadverlegeband angeordnet, die mit einem Tragrahmen des Schwadverlegebandes gekoppelt ist, vorzugsweise über wenigstens einen bogenförmigen oder abgewinkelten Ausleger, der in der Verlegestellung des Schwadverlegebandes von oben nach hinten unten über die Zinkenrotoren hinwegverläuft. Auf diese Weise wird eine sehr stabile Anordnung des Schwadverlegebandes am Kreiselheuer erzielt. Die Verstellvorrichtung ermöglicht die jeweils optimale Positionierung des Schwadverlegebandes in Bezug auf die Zinkenrotoren. Die Verstellvorrichtung kann hydraulisch, elektrisch oder mechanisch bedienbar sein. Für einfache Anwendungsfälle kann auch eine manuelle Umstellung zweckmäßig sein. Der wenigstens eine Ausleger verhindert Kollisionen zwischen den jeweiligen Komponenten und ermöglicht einen ungestörten Erntegutfluss vom Boden auf das Schwadverlegeband und auf diesem in das Schwad.

Zweckmäßig ist das Schwadverlegeband nach Art eines ebenen Förderbandes mit innenliegenden Umlenkrollen oder als Kettenförderer nach Art eines Ladewagen-Kratzerbandförderers an einem Tragrahmen ausgebildet und in der Verlegestellung hinter den Zinkenrotor-Umlaufbahnen so positioniert, dass sein zu den Zinkenrotoren weisendes, z.B. ebenes Fördertrum von hinten oben nach vorne unten bis nahe zum Boden schräg geneigt ist. Die Neigung kann auf etwa 45° eingestellt sein, wobei das Erntegut auf dem Schwadverlegeband nicht nennenswert zum Herabgleiten neigt, weil es gleich abgefördert wird und zudem der permanente Förderstrom von den Zinkenrotoren mitwirkt, Erntegut auf dem Schwadverlegeband zu halten. Auch flachere oder steilere Winkel als 45° können zweckmäßig sein. Gegebenenfalls können am Schwadverlegeband Abweise- oder Rückhalteeinrichtungen vorgesehen sein, die das Überwerfen von Erntegut über das Schwadverlegeband hinaus oder das Herabfallen unterbinden.

Zweckmäßig wird das Schwadverlegeband hydraulisch über wenigstens eine Umlenkrolle angetrieben, vorzugsweise wahlweise in jeder von beiden entgegengesetzten Laufrichtungen, je nach Schwadbildestrategie. Ein hydraulischer Antrieb erlaubt eine feinfühlige Regelung der Fördergeschwindigkeit auf dem Schwadverlegeband und bietet den Vorteil, Antriebsenergie einfach vom Kreiselheuer oder Schlepper in das Schwadverlegeband zu übertragen. Alternativ ist auch jedes andere Antriebsprinzip zweckmäßig, z.B. ein elektrischer Antrieb.

Ferner kann das Schwadverlegeband zweckmäßig entlang des Tragbalkens oder am Fahrwerk hydraulisch, elektrisch oder mechanisch verstellt werden, vorzugsweise zwischen mindestens zwei unterschiedlichen Schwadbildestellungen (Mittenschwad oder Seitenschwad links oder rechts).

Günstig ist, wenn das Schwadverlegeband mindestens zwei oder sogar drei nebeneinanderliegenden Zinkenrotoren zugeordnet ist, so dass es die von diesen auf kürzestem Weg übergebenen Förderströme aufnimmt und wegbringt.

In einer baulich einfachen Ausführungsform ist im Anbauraum des Kreiselheuers zum demontierbaren Festlegen des jeweiligen Schwadverlegebandes eine Fangtasche mit Bolzensicherung beispielsweise für den Ausleger des Schwadverlegebandes vorgesehen. Alternativ könnte auch der Tragrahmen des Schwadverlegebandes bei dessen Demontage vom Ausleger getrennt werden, der am Kreiselheuer verbleibt und gegebenenfalls nur hochgestellt wird.

Um die Schwadbildung bei der jeweils gewählten Schwadbilde-Strategie zu verbessern, ist es zweckmäßig, wenn am Kreiselheuer für das mindestens eine Schwadverlegeband verstellbare Schwadtücher und/oder Leitbleche vorgesehen sind, die sich so positionieren lassen, dass sie eine saubere Schwadbildung begünstigen, beispielsweise bei einem Mittenschwad in der Gerätemitte und in Fahrtrichtung ausgerichtet, bei einem Seitenschwad beispielsweise an der Außenseite des Seitenschwads.

Optional vorgesehene, unten- und/oder hintenliegende Tast- oder Führungsräder des Schwadverlegebandes können den Bodenabstand kontrollieren und Gewicht abtragen.

Anhand der Zeichnungen wird eine Ausführungsform des Erfindungsgegenstandes erläutert. Es zeigen:
- Fig. 1: eine Vorderansicht (entgegengesetzt zur Fahrtrichtung) eines Kreiselheuers mit Schwadverlegebändern,
- Fig. 2: eine Seitenansicht zu Fig. 1, wobei zwei unterschiedliche Stellungen der Schwadverlegebänder angedeutet sind,
- Fig. 3: eine Draufsicht zu Fig. 1,
- Fig. 4: eine Perspektivdarstellung des Kreiselheuers in Blickrichtung von schräg oben, in einer Einstellung der Schwadverlegebänder zum Bilden eines Seitenschwads, und
- Fig. 5: eine Perspektivdarstellung ähnlich der von Fig. 4 mit einer Einstellung der Schwadverlegebänder zum Bilden eines Mittenschwads.

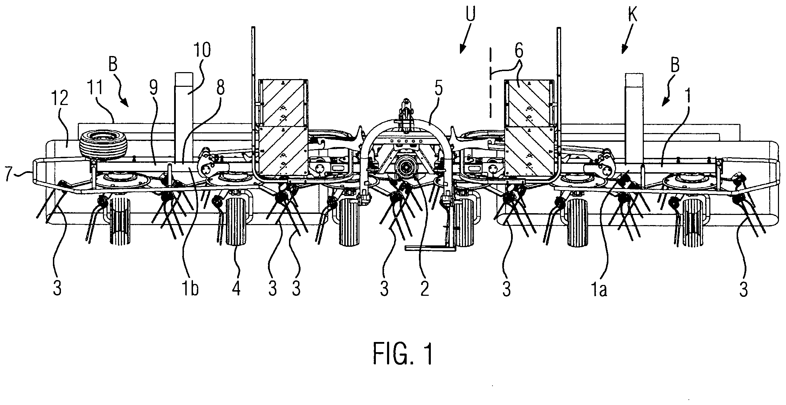

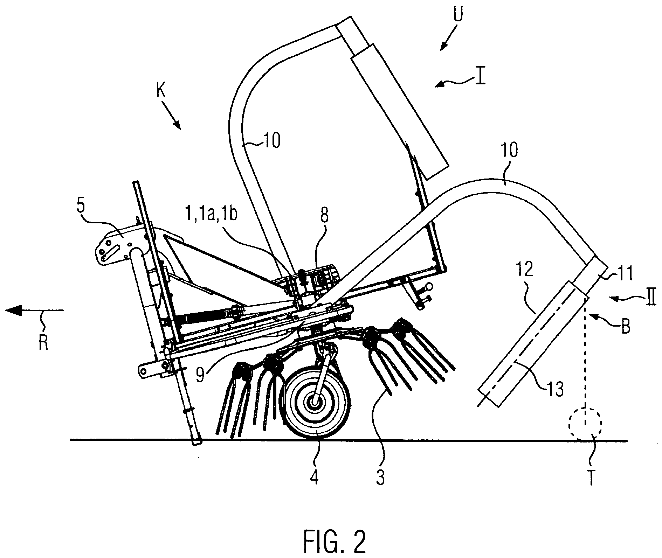

Ein Kreiselheuer K ist in den Fig. 1 bis 3 durch mindestens ein angebrachtes Schwadverlegeband B, vorzugsweise wie gezeigt, von zwei nebeneinanderliegenden Schwadverlegebändern B zu einem Universalgerät 4 für den maschinellen Futterernteprozess modifiziert, das sowohl Zetten und Wenden als auch Zusammenrechen oder nur Zusammenrechen zur Schwadbildung ermöglicht. Der Kreiselheuer K kann als Basisgerät jedoch auch nur zum Zetten und Wenden eingesetzt werden, in dem die Schwadverlegebänder B entweder demontiert oder in die in Fig. 2 gezeigte, angehobene Passivstellung I verstellt werden.

Mit dem erfindungsgemäß ausgestatteten Universalgerät U lassen sich mehrere unterschiedliche Arbeiten durchführen. Es lässt sich gemähtes Grünfutter zetten und wenden und zum Trocknen auf dem Feld verteilen. Es kann gemähtes Grünfutter gezettet und in ein oder mehrere Schwade zum nachfolgenden Aufnehmen gebracht werden. Ferner können mehrere Schwade in wenigstens ein großes Schwad vereinigt werden. Zum Umrüsten des Universalgerätes U für unterschiedliche Einsatzzwecke sind nur rasch und einfach durchzuführende Umstellungen erforderlich.

Das Universalgerät U kann als Basisgerät den Kreiselheuer K mit zwei, vier, sechs, acht, zehn oder zwölf Zinkenrotoren 3 an einem quer zur Fahrtrichtung R orientierten Tragbalken 1 aufweisen, der, zweckmäßig, mittig in linke und rechte Tragbalken-Seitenteile 1a, 1b und darin in Sektionen unterteilt und an einem Anbaubock 5 zur Anbringung an der Dreipunkt-Hebevorrichtung eines Schleppers (nicht gezeigt) angeordnet ist. In der als nicht beschränkendes Beispiel gezeigten Ausführungsform weist der Kreiselheuer K sechs Zinkenrotoren 3 auf, wobei jeweils drei nebeneinanderliegenden Zinkenrotoren 3 ein Schwadverlegeband B zugeordnet ist. Bei noch mehr Zinkenrotoren 3 oder bei den gezeigten sechs Zinkenrotoren 3 könnten pro Tragbalken-Seitenteil 1a, 1b auch jeweils mehr als ein Schwadverlegeband B, z.B. zwei oder mehr Schwadverlegebänder B, vorgesehen sein. Zweckmäßig ist unabhängig von der Anzahl der Zinkenrotoren 3 mindestens zwei nebeneinanderliegenden Zinkenrotoren 3 ein Schwadverlegeband B zugeordnet.

Eine nicht gezeigte Variante weist ein den Tragbalken 1 stützendes Fahrwerk (z.B. eine gezogene Variante) entweder mit einem Anbaubock 5 oder einer einfachen Kopplung auf. In diesem Fall kann jedes Schwadverlegeband B am Fahrwerk angeordnet sein, z.B. an einem Fahrwerkseitenteil.

In den Fig. 1 bis 3 ist jedes Schwadverlegeband B an einem am Kreiselheuer K, zweckmäßig dessen Tragbalken 1 (oder am nicht gezeigten Fahrwerk), angeordneten Anbauraum 8 befestigt, an welchem eine Verstellvorrichtung 9 angebracht sein kann, die über wenigstens einen schräg nach hinten oben und dann nach unten abgebogenen oder abgewinkelten Ausleger 10 mit einem Tragrahmen 11 verbunden ist, an welchem das z.B. nach Art eines ebenen Förderbandes ausgebildete Schwadverlegeband B angeordnet ist. Dieses umfasst beispielsweise ein endloses Förderband 12, das über Umlenkrollen 13 läuft, die am Tragrahmen 11 angebracht sind, wobei mindestens ein Hydromotor 15 oder ein Elektromotor (nicht gezeigt) wenigstens eine Umlenkrolle 13 antreibt, zweckmäßig wahlweise in jeder von zwei entgegengesetzten Laufrichtungen. Das Schwadverlegeband B ist an der Hinterseite des Kreiselheuers K benachbart zu den Umlaufbahnen der Zinkenrotoren 3 im Wesentlichen parallel zum Tragbalken 1 orientiert und befindet sich in Fig. 2 in einer Ablagestellung II.

Alternativ kann das Schwadverlegeband B nach Art eines Kratzerbandförderers (nicht gezeigt) ausgebildet sein, z.B. wie dies bei Ladewagen üblich ist. Beispielsweise sind beiderseits eines Bodens angetriebene Gelenk-Kettenschlaufen geführt, zwischen denen sich querliegende Kratzerstäbe oder Kratzerkettenstränge erstrecken, die über den oder oberhalb des Bodens bewegt werden und das Erntegut mitnehmen.

Zweckmäßig ist das Schwadverlegeband B (Fig. 2) in der Verlegestellung II von hinten oben nach vorne unten schräg geneigt, so dass das Fördertrum des Förderbandes 12 schräg zu den Zinkenrotoren 3 weist. Der Winkel der Schrägstellung beträgt beispielsweise etwa 45°, ist aber z.B. mittels der Verstelleinrichtung 9 variierbar. Zweckmäßig kann das Schwadverlegeband B (Fig. 2) aus der Verlegestellung II in eine angehobene Passivstellung I verbracht werden, in der der Kreiselheuer K Erntegut nur zettet und wendet bzw. der Kreiselheuer K besser manövriert oder transportiert werden kann.

Das jeweilige Schwadverlegeband B ist entweder fest am Kreiselheuer K (am Tragbalken 1 oder am Fahrwerk) montiert und (Fig. 2) anhebbar und absenkbar, oder demontierbar im Anbauraum 8 angebracht und mit wenigen Handgriffen demontierbar und abstellbar.

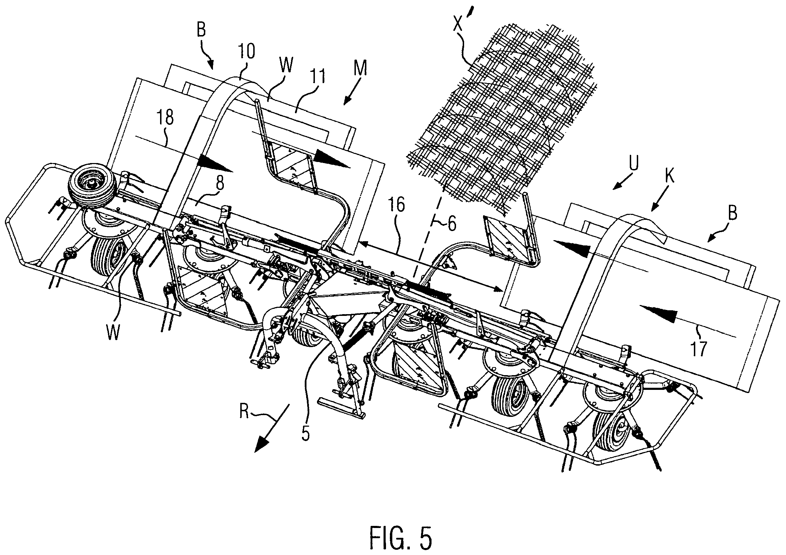

Zur Montage bzw. Demontage kann beispielsweise im Anbauraum 8 oder zwischen dem Ausleger 10 und dem Tragrahmen 11 eine Schnellwechselvorrichtung W (Fig. 5) vorgesehen sein.

Beispielsweise ist die Schnellwechselvorrichtung W im Anbauraum 8 eine nicht gezeigte Fangtasche mit Bolzenverriegelung, z.B. für den oder die Ausleger 10.

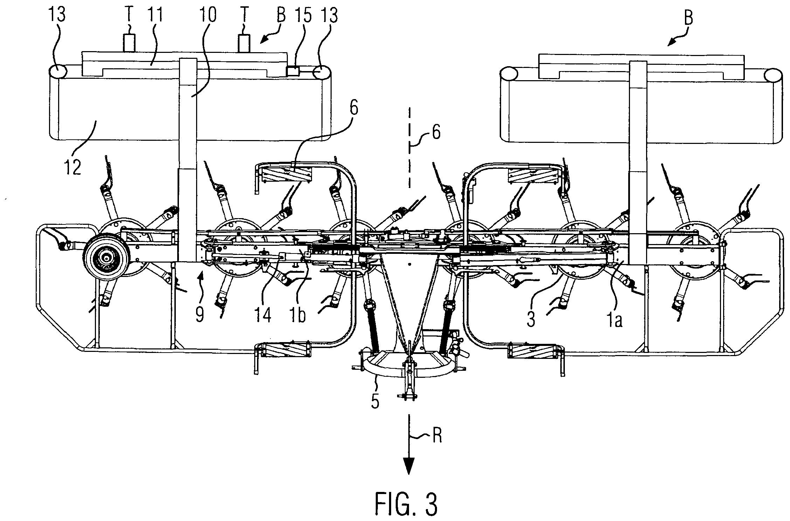

Zum hydraulischen Querverstellen des jeweiligen Schwadverlegebandes B sind beispielsweise Hydraulikzylinder 14 am Tragbalken 1 (oder am Fahrwerk) angebracht (Fig. 3). Auch zum Schwenkverstellen (Fig. 2) des Schwadverlegebandes B kann wenigstens ein nicht gezeigter Hydrozylinder vorgesehen sein. Alternativ können diese Verstellbewegungen auch mechanisch oder elektrisch gesteuert oder manuell ausgeführt werden.

Des Weiteren verfügt das Universalgerät U in den Fig. 1 bis 3 über Bodenlaufräder 4 für die Zinkenrotoren 3, den mittig am Tragbalken 1 angebauten Anbaubock 5, Warntafeln und/oder Schwadtücher und/oder Leitbleche 6 an entsprechenden Gestängen, und einen Sicherheitsrahmen 7. Auch jedes Schwadverlegeband B könnte wenigstens ein unten- und/oder hintenliegendes Tast- oder Führungsrad aufweisen, z.B. wie in Fig. 2, 3 angedeutet.

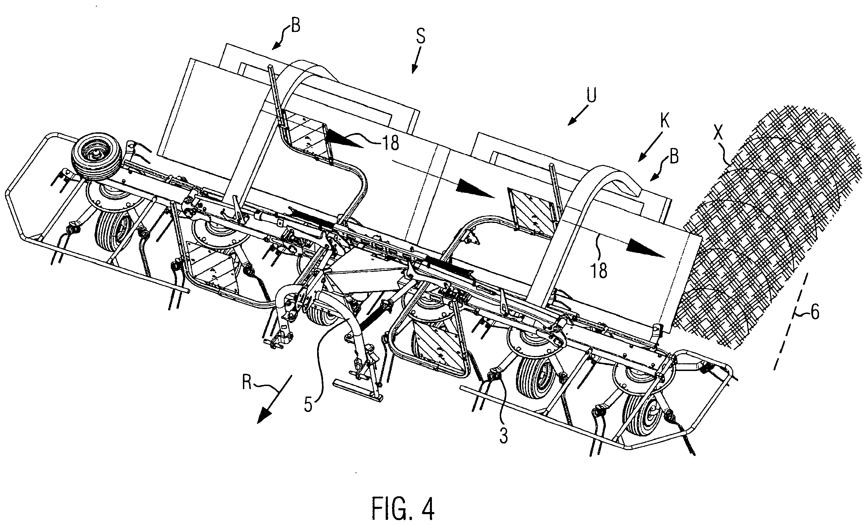

Fig. 4 verdeutlicht das Universalgerät U in einer Seitenschwad-Bildeeinstellung S, um an der in Fahrtrichtung linken Seite ein Seitenschwad X abzulegen. Hierfür ist das in Fig. 4 linke Schwadverlegeband B so weit nach rechts verstellt, dass es sich im Wesentlichen ohne Übergang an das rechte Schwadverlegeband B anschließt (Staffelung), oder sich sogar mit diesem überlappt. Beide Schwadverlegebänder B werden gleichsinnig (Pfeile 18) angetrieben, und zwar in Richtung zur Geräteseite, an der das Seitenschwad X abzulegen ist.

Soll an der in Fahrtrichtung rechten Seite ein Seitenschwad abgelegt werden, dann werden beide Schwadverlegebänder B in Fahrtrichtung nach rechts gleichsinnig angetrieben, und gegebenenfalls etwas weiter in Fahrtrichtung nach rechts verstellt, als in Fig. 4 gezeigt.

Sollen zwei Einzelschwade gebildet werden, dann werden beide Schwadverlegebänder B voneinander weg gefahren (etwa wie in Fig. 5) und gleichsinnig angetrieben. In der Einstellung in Fig. 4 könnten die beiden Schwadverlegebänder B auch gegensinnig von der Mitte weg nach außen angetrieben werden, so dass sie Seitenschwade an beiden Außenseiten bilden.

Fig. 5 verdeutlicht eine Mittenschwad-Bildeeinstellung M der beiden Schwadverlegebänder B zum Bilden eines großen Mittenschwades 18. Die beiden Schwadverlegebänder B sind von der Mitte weg etwas nach außen verfahren, so dass zwischen ihnen ein Zwischenabstand 16 vorliegt, und gegensinnig (Pfeile 17, 18) jeweils zur Mitte angetrieben. Durch Verändern des Abstandes 16 kann die Schwadbreite variiert werden. Zweckmäßig wird zum Bilden des Mittenschwads 18 wenigstens ein Schwadtuch oder ein Leitblech 6 in etwa in die Mitte eingeführt.

Sind pro Tragbalken-Seitenteil 1a, 1b (oder Fahrwerkseitenteil) beispielsweise zwei Schwadverlegebänder B vorgesehen, so sind Mischeinstellungen möglich, so dass die beiden Schwadverlegebänder an jeder Seite gestaffelt zur Mitte fördern, und dort das Mittelschwad 18 ablegen, oder in der Mitte zusammengefahren sind und gegensinnig jeweils nach außen angetrieben werden, um gleichzeitig zwei Seitenschwade zu bilden.

An den Schwadverlegebändern B könnten hintere und/oder vordere Abweiser oder Rückhalter montiert sein, um ein Überwerfen des Erntegutes über das Schwadverlegeband B oder ein Herabgleiten von Erntegut beim Fördern in den Schwad zu minimieren (nicht gezeigt).

Die Schwadverlegebänder B, falls demontierbar angebracht, können zusätzlich nicht gezeigte Stützen zum leichteren Abstellen auf dem Boden aufweisen. Bei breit ausgelegten Schwadverlegebändern B könnten deren Tragrahmen gegebenenfalls mit mehr als zwei Umlenkrollen für das Förderband 12 ausgestattet und mit mehr als nur einem Ausleger 10 mit dem Tragbalken 1 verbunden sein. Im Hinblick auf das Zusatzgewicht der daran angebrachten Schwadverlegebänder B ist zweckmäßig der Tragbalken 1 des Kreiselheuers K verstärkt, was bei Anbringen der Schwadverlegebänder B am Fahrwerk nicht erforderllich ist.

Das Universalgerät U kann gezogen und entweder an die hintere Dreipunkt-Hebevorrichtung des Schleppers angebaut oder falls mit einem Fahrwerk ausgestattet dort oder an anderer Stelle des Schleppers nur angekoppelt werden. Auch ein Frontanbau am Schlepper ist möglich.

## Patentansprüche

1. Kreiselheuer (K) mit mindestens zwei an einem quer zur Fahrtrichtung (R) orientierten Tragbalken (1, 1a, 1b) angeordneten Zinkenrotoren (3) zum Zetten und Wenden von Erntegut, **dadurch gekennzeichnet, dass** an der Hinterseite des Kreiselheuers (K) am Tragbalken (1) mindestens ein zinkenloses Schwadverlegeband (B) angeordnet ist, das zumindest in etwa in Tragbalkenrichtung antreibbar und relativ zu den Zinkenrotoren (3) des Kreiselheuers (K) verstellbar ist, dass der Kreiselheuer (K) beiderseits eines Schlepper-Anbaubocks (5) oder einer Kopplung an Tragbalkenseitenteilen (1a, 1b) jeweils mindestens zwei Zinkenrotoren aufweist, dass an jedem Tragbalkenseitenteil (1a, 1b) und/oder an einem Fahrwerkseitenteil wenigstens ein Schwadverlegeband (B) vorgesehen ist, und dass die Schwadverlegebänder (B) entweder mit einem mittigen Zwischenabstand (16) in eine Mittelschwad-Bildestellung (M) einstellbar und dann gegensinnig zur Mitte hin antreibbar, oder ohne Zwischenabstand bzw. gestaffelt bzw. einander überlappend in Seitenschwad-Bildestellungen (S) einstellbar und dann gleichsinnig zur jeweiligen Schwadseite antreibbar sind.

2. Kreiselheuer nach Anspruch 1, **dadurch gekennzeichnet, dass** das Schwadverlegeband (B) in einem Anbauraum (8) des Kreiselheuers (K), vorzugsweise am Tragbalken (1), oder eines Fahrwerks des gezogenen oder im Frontanbau geschobenen Kreiselheuers (K) fest montiert und zwischen einer abgesenkten Verlegestellung (II) und einer angehobenen Passivstellung (I) umstellbar ist.

3. Kreiselheuer nach Anspruch 1, **dadurch gekennzeichnet, dass** das Schwadverlegeband (B) in einem Anbauraum (8) des Kreiselheuers (K), vorzugsweise am Tragbalken (1), oder eines Fahrwerks des gezogenen oder im Frontanbau geschobenen Kreiselheuers (K) demontiertbar festgelegt ist, vorzugsweise mit wenigstens einer Schnellwechselvorrichtung (W), und, vorzugsweise in festgelegtem Zustand zwischen einer abgesenkten Verlegestellung (II) und einer angehobenen Passivstellung (I) umstellbar ist.

4. Kreiselheuer nach Anspruch 2 oder 3, **dadurch gekennzeichnet, dass** beim Anbauraum (8) des Kreiselheuers (K) eine Verstellvorrichtung (9, 14) für das Schwadverlegeband (B) angeordnet ist, die mit einem Tragrahmen (11) des Schwadverlegebandes (B) gekoppelt ist, vorzugsweise über wenigstens einen bogenförmigen oder abgewinkelten Ausleger (10), der in der Verlegestellung (II) von oben nach hinten unten über die Zinkenrotoren (3) hinwegverläuft.

5. Kreiselheuer nach wenigstens einem der Ansprüche 1 bis 4, **dadurch gekennzeichnet, dass** das Schwadverlegeband (B) nach Art eines ebenen Förderbandes mit innenliegenden Umlenkrollen (13) oder als Kettenförderer nach Art eines Ladewagen-Kratzerbandförderers an einem Tragrahmen (11) ausgebildet und in der Verlegestellung (II) hinter den Zinkenrotor-Umlaufbahnen so positioniert ist, dass sein Fördertrum von hinten oben nach vorne unten bis nahe zum Boden schräg geneigt ist.

6. Kreiselheuer nach wenigstens einem der vorhergehenden Ansprüche, **dadurch gekennzeichnet, dass** das Schwadverlegeband (B) hydraulisch oder elektrisch über wenigstens eine Umlenkrolle (13) antreibbar ist, vorzugsweise wahlweise in entgegengesetzten Laufrichtungen (17, 18).

7. Kreiselheuer nach Anspruch 2 oder 3, **dadurch gekennzeichnet, dass** das Schwadverlegeband (B) entlang des Tragbalkens (1, 1a, 1b) oder am Fahrwerk hydraulisch oder mechanisch verstellbar ist, vorzugsweise zwischen mindestens zwei unterschiedlichen Schwadbilde-Stellungen (M, S).

8. Kreiselheuer nach Anspruch 1, **dadurch gekennzeichnet, dass** das jeweilige Schwadverlegeband (B) mindestens zwei nebeneinanderliegenden Zinkenrotoren (3) zugeordnet ist.

9. Kreiselheuer nach wenigstens einem der vorhergehenden Ansprüche, **dadurch gekennzeichnet, dass** zum demontierbaren Festlegen des Schwadverlegebandes (B) im Anbauraum (8) am Tragbalken (1) oder dem Fahrwerk eine Fangtasche mit Bolzensicherung für das Schwadverlegeband (B), vorzugsweise für den Ausleger (10), vorgesehen ist.

10. Kreiselheuer nach wenigstens einem der vorhergehenden Ansprüche, **dadurch gekennzeichnet, dass** am Kreiselheuer (K) und/oder dem Fahrwerk für das mindestens eine Schwadverlegeband (B) verstellbare Schwadtücher und/oder Leitbleche (6) vorgesehen sind.

11. Kreiselheuer nach wenigstens einem der vorhergehenden Ansprüche, **dadurch gekennzeichnet, dass** das Schwadverlegeband (B) mit wenigstens einem unten- und/oder hintenliegenden Tast- oder Führungsrad (R) ausgestattet ist.

## Claims

1. Rotary tedder (K), comprising at least two tine rotors (3) arranged at a carrying beam (1, 1a, 1b) oriented cross-wise to the travelling direction (R) for tedding and reversing of forage, **characterized in that** at the carrying beam (1) at least one tine-free swath displacing band (B) is arranged at the rear side of the rotary tedder (K), the swath displacing band (B) being drivable at least substantially in the direction of the carrying beam and being adjustable relative to the tine rotors (3) of the rotary tedder (K), that the rotary tedder (K) respectively comprises at least two tine rotors (3) at carrying-beam side parts (1a, 1b) of the carrying beam (1) at both sides of a tractor-hitch (5) or of a coupling, that at least one swath displacing band (B) is provided at each carrying beam-side part (1a, 1b) and/or at a side part of an undercarriage, and that the swath displacing bands (B) are either adjustable into a central swath-forming position (M) with a central intermediate distance (16) and then are drivable opposite to each other towards the centre or are adjustable in side swath-forming positions (S) without an intermediate distance or staggered or another overlapping and then are drivable in the same sense to the respective swath side.

2. Rotary tedder according to claim 1, **characterized in that** the swath displacing band (B) is fixedly mounted in a mounting space (8) of the rotary tedder (K), preferably at the carrying beam (1) or in a mounting space of an undercarriage of the either towed or front-mounted and pushed rotary tedder (K), and that the swath displacing band (B) is adjustable between a lowered displacing position (II) and a lifted passive position (I).

3. Rotary tedder according to claim 1, **characterized in that** the swath displacing band (B) is secured in demountable fashion in a mounting space (8) of the rotary tedder (K), preferably at the carrying beam (1) or in a mounting space (8) of an undercarriage of the either towed or front mounted and pushed rotary tedder (K), preferably by means of at least one quick change device (W), and, preferably, is adjustable in a secured condition between a lowered displacing position (II) and a lifted passive position (I).

4. Rotary tedder according to claim 2 or 3, **characterized in that** an adjustment device (9, 14) for the swath displacing band (B) is arranged at the mounting space (8) of the rotary tedder (K), the adjusting device (9, 14) being coupled with a carrying frame (11) of the swath displacing band (B), preferably via at least one arcuate or angled outrigger (10) extending in the displacing position (2) of the swath displacing band (B) from above over the tine rotors (3) downwards to the rear.

5. Rotary tedder according to at least one of claims 1 to 4, **characterized in that** the swath displacing band (B) is designed either like a flat band conveyor containing inner deflection rollers (13) or as a chain conveyor like a loading wagon-slate-conveyor at the carrying frame (11), and that the swath displacing band (B) in the displacing position (II) is positioned behind the rotation paths of the tine rotors (3) such that the conveying flight of the conveyor band is inclined in a direction from the rear and above to the front and downwards close to the ground.

6. Rotary tedder according to at least one of the preceding claims, **characterized in that** the swath displacing band (B) is drivable hydraulically or electrically via at least one deflection roller (13), preferably, selectively, in opposite running directions (17, 18).

7. Rotary tedder according to claim 2 or 3, **characterized in that** the swath displacing band (B) is adjustable along the carrying beam (1, 1a, 1b) or at the undercarriage in hydraulic or mechanical fashion, preferably between at least two different swath-forming positions (M, S).

8. Rotary tedder according to claim 1, **characterized in that** a respective swath displacing band (B) is functionally associated to at least two adjacent tine rotors (3).

9. Rotary tedder according to at least one of the preceding claims, **characterized in that** for securing the swath displacing band (B) in the mounting space (8) at the carrying beam (1) or the undercarriage in dismountable fashion, a catching pocket having a bolt safety device for the swath displacing band (B) is provided, preferably for the outrigger (10).

10. Rotary tedder according to at least one of the preceding claims, **characterized in that** adjustable swath-rags and/or swath directing sheet metal plates (6) are provided.

11. Rotary tedder according to at least one of the preceding claims, **characterized in that** the swath displacing band (B) is equipped with at least one sensing wheel or guiding wheel (R) situated below and/or in the rear of the swath displacing band.

## Revendications

1. Faneuse rotative (K) comprenant au moins deux rotors à dents (3) disposés sur une poutre porteuse (1, 1a, 1b) orientée transversalement à la direction de conduite (R), pour épandre et retourner une récolte, **caractérisée en ce qu'**au moins une bande de dépose d'andains (B) sans dents est disposée au niveau du côté arrière de la faneuse rotative (K) sur la poutre porteuse (1), laquelle peut être entraînée au moins approximativement dans la direction de la poutre porteuse et peut être réglée par rapport aux rotors à dents (3) de la faneuse rotative (K), **en ce que** la faneuse rotative (K) présente à chaque fois au moins deux rotors à dents de chaque côté d'un support de montage de tracteur (5) ou d'un accouplement au niveau des parties latérales de la poutre porteuse (1a, 1b), **en ce qu'**au niveau de chaque partie latérale de la poutre porteuse (1a, 1b) et/au niveau d'une partie latérale du châssis, est prévu au moins une bande de dépose d'andains (B), et **en ce que** les bandes de dépose d'andains (B) peuvent être ajustées soit avec un espacement mutuel central (16) dans une position de formation d'andains centrale (M) et peuvent alors être entraînées en sens inverse vers le centre, soit peuvent être ajustées sans espacement mutuel ou en quinconce ou en se chevauchant l'une l'autre dans des positions de formation d'andains latérales (S) et peuvent alors être entraînées dans le même sens vers le côté d'andain respectif.

2. Faneuse rotative selon la revendication 1, **caractérisée en ce que** la bande de dépose d'andains (B) est montée fixement dans un espace de montage (8) de la faneuse rotative (K), de préférence sur la poutre porteuse (1), ou d'un châssis de la faneuse rotative (K) tirée, ou poussée dans le cas d'un montage frontal, et peut être changée entre une position de dépose abaissée (II) et une position passive relevée (I).

3. Faneuse rotative selon la revendication 1, **caractérisée en ce que** la bande de dépose d'andains (B) est fixée de manière démontable dans un espace de montage (8) de la faneuse rotative (K), de préférence sur la poutre porteuse (1), ou d'un châssis de la faneuse rotative (K) tirée, ou poussée dans le cas d'un montage frontal, de préférence peut être changée avec au moins un dispositif de changement rapide (W) et ce de préférence dans l'état fixé entre une position de dépose abaissée (II) et une position passive relevée (I).

4. Faneuse rotative selon la revendication 2 ou 3, **caractérisée en ce que** dans l'espace de montage (8) de la faneuse rotative (K) est disposé un dispositif de réglage (9, 14) pour la bande de dépose d'andains (B), lequel est accouplé à un cadre porteur (11) de la bande de dépose d'andains (B), de préférence par le biais d'au moins un bras de potence (10) de forme courbe ou coudée, qui s'étend dans la position de dépose (II) depuis le haut vers l'arrière et vers le bas au-delà des rotors à dents (3).

5. Faneuse rotative selon au moins l'une quelconque des revendications 1 à 4, **caractérisée en ce que** la bande de dépose d'andains (B) est réalisée à la manière d'une bande de transport plane avec des poulies de renvoi (13) situées à l'intérieur ou sous forme de transporteur à chaîne à la manière d'un convoyeur de camion sur un cadre porteur (11) et est positionnée dans la position de dépose (II) derrière les trajectoires de circulation des rotors à dents de telle sorte que son tronçon de transport soit incliné obliquement depuis le haut et l'arrière vers le bas et l'avant jusqu'à proximité du sol.

6. Faneuse rotative selon au moins l'une quelconque des revendications précédentes, **caractérisée en ce que** la bande de dépose d'andains (B) peut être entraînée hydrauliquement ou électriquement par le biais d'au moins une poulie de renvoi (13), de préférence de manière sélective dans des sens de rotation opposés (17, 18).

7. Faneuse rotative selon la revendication 2 ou 3, **caractérisée en ce que** la bande de dépose d'andains (B) peut être déplacée hydrauliquement ou mécaniquement le long de la poutre porteuse (1, 1a, 1b) ou au niveau du châssis, de préférence entre au moins deux positions de formation d'andains différentes (M, S).

8. Faneuse rotative selon la revendication 1, **caractérisée en ce que** la bande de dépose d'andains respective (B) est associée à au moins deux rotors à dents juxtaposés (3).

9. Faneuse rotative selon au moins l'une quelconque des revendications précédentes, **caractérisée en ce que** pour la fixation démontable de la bande de dépose d'andains (B), il est prévu, dans l'espace de montage (8) sur la poutre porteuse (1) ou le châssis, une cavité de réception avec une fixation par boulon pour la bande de dépose d'andains (B), de préférence pour le bras de potence (10).

10. Faneuse rotative selon au moins l'une quelconque des revendications précédentes, **caractérisée en ce que** sur la fameuse rotative (K) et/ou sur le châssis pour l'au moins une bande de dépose d'andains (B), sont prévues des bâches à andains et/ou des tôles directrices (6) réglables.

11. Faneuse rotative selon au moins l'une quelconque des revendications précédentes, **caractérisée en ce que** la bande de dépose d'andains (B) est munie d'au moins une roue de jauge ou d'une roue de réglage (R) située en bas et/ou à l'arrière.
